Europäisches Patentamt

European Patent Office

Office européen des brevets

(11) Veröffentlichungsnummer: **0 307 832 B1**

# EUROPÄISCHE PATENTSCHRIFT

(45) Veröffentlichungstag der Patentschrift: **13.05.92**

(51) Int. Cl.⁵: **B29C 33/60**, B29C 33/62

(21) Anmeldenummer: **88114842.3**

(22) Anmeldetag: **10.09.88**

(54) **Zusammensetzungen mit Dichlortrifluorethan.**

(30) Priorität: **17.09.87 DE 3731223**

(43) Veröffentlichungstag der Anmeldung:
**22.03.89 Patentblatt 89/12**

(45) Bekanntmachung des Hinweises auf die
Patenterteilung:
**13.05.92 Patentblatt 92/20**

(84) Benannte Vertragsstaaten:
**BE DE ES FR GB IT NL**

(56) Entgegenhaltungen:
DE-A- 1 816 453          DE-A- 1 925 675
DE-A- 2 552 236          DE-A- 3 335 870
FR-A- 2 439 228          GB-A- 914 447
US-A- 4 032 467

KUNSTSTOFFE, Band 72, Nr. 8, August 1982,
Seiten 461-462, München, DE; K. SCHARDT:
"Einflussgrössen beim Einsatz von Trennmitteln"

(73) Patentinhaber: **Kali-Chemie Aktiengesellschaft
Postfach 220, Hans-Böckler-Allee 20
W-3000 Hannover 1(DE)**

(72) Erfinder: **Buchwald, Hans
Am Rodelberg 51 A
W-3003 Ronnenberg 3(DE)**
Erfinder: **Raschkowski, Boleslaus
In der Hespe 246
W-3061 Wiedensahl(DE)**

(74) Vertreter: **Lauer, Dieter, Dr.
c/o Kali-Chemie Aktiengesellschaft Postfach
220
W-3000 Hannover 1(DE)**

**Beschreibung**

Die vorliegende Erfindung betrifft flüssige Zusammensetzungen, die Dichlortrifluorethan als Verdünnungsmittel und wenigstens ein Agens mit trennmittelwirksamen Eigenschaften enthalten, sowie die Verwendung dieser Zusammensetzungen und ein Verfahren zu deren Herstellung.

In vielen industriellen Anwendungsbereichen die Arbeitsvorgänge wie Gießen, Formen, Pressen usw. umfassen - z.B. bei der Herstellung und Verarbeitung von Kunststoffen, Schaumstoffen, Baustoffen, Gummiartikeln, Reifen, Metallen, Gläsern, Keramikprodukten usw. - werden heute Trennmittel, Gleitmittel oder Schalmittel benötigt. Trennmittel sind in diesem Zusammenhang feste oder flüssige Filme, die die Adhäsionskräfte zwischen zwei aneinandergrenzenden Oberflächen verringern, d.h. ihr Verkleben verhindern. Gleitmittel sind Zusatzstoffe für plastische Massen, zum Beispiel Preßmassen und Spritzgußmassen. Sie werden benötigt um die Füllstoffe leichter gleitend und die Preßmassen damit leichter verformbar zu machen. Die Trenn-, Gleit- bzw. Schalmittel enthalten trennmittelwirksame Komponenten, zum Beispiel in Form von trockenen Pulvern, von trockenen Filmen oder Naßfilmen, Pasten, eingebrannten Filmen, Lösungen oder Dispersionen. Eine Sonderform stellen die sogenannten internen trennmittelwirksamen Komponenten dar, die in das zu entformende Gut eingemischt werden und sich entweder an der Oberfläche anzureichern vermögen oder eine schnellere Aushärtung der Oberfläche bewirken, so daß es zwischen Formwand und Formteil zu keinem Verbund kommt.

Vielfach müssen bei obigen Arbeitsvorgängen von Zeit zu Zeit die Rückstände des Agens mit trennmittelwirksamen Eigenschaften mit Hilfe von Lösungsmitteln aus der Form entfernt werden. Gewöhnlich werden zur Reinigung der Formen Lösungsmittel wie Kohlenwasserstoffe und Chlorkohlenwasserstoffe verwendet, von denen die ersten feuergefärlich sind und die zweiten Hautreizungen verursachen.

Nach einem Verfahren aus der DOS 25 52 236 ist ein Formtrennmittel für die Herstellung geformter Kautschukprodukte und die Verformung von Polyurethanschaumstoffen bekannt. Die dort verwendete Formtrennmasse enthält Paraffinwachs, Leuchtöl und Natriumseifen von Tallölsäuren in einem paraffinischen Grundöl. Das eingesetzte Formtrennmittel muß in Wasser löslich oder emulgierbar sein, um durch Sprühen oder Waschen mit warmem Wasser das Formtrennmittel vom Formprodukt trennen zu können.

In der DOS 33 35 870 wird die Herstellung von speziellen Wachsderivaten beschrieben, die zum Beispiel als Trennmittelbestandteile, insbesondere aber als Kühlschmiermittel, verwendet werden können, wobei als Lösungsmittel die Fluorchlorkohlenwasserstoffe Trichlormonofluormethan, 1,1,2-Trichlor-1,2,2-trifluorethan, 1,1,2,2-Tetrachlordifluorethan, Tetrachlormonofluorethan und/oder Trichlordifluorethan als geeignet angegeben werden.

Die Aufgabe der Erfindung ist es, neue verbesserte flüssige Zusammensetzungen von Agentien mit trennmittelwirksamen Eigenschaften bereitzustellen, die eine sparsame Verwendung gestatten, die energiesparend sind und ohne häufiges Reinigen der benutzten Formen verwendet werden können.

Die Aufgabe wird gelöst durch die erfindungsgemäßen Zusammensetzungen, Verwendungen und Verfahren.

Die vorliegende Erfindung stellt flüssige Zusammensetzungen mit verbesserten Eigenschaften zur Verfügung, die aus einem Verdünnungsmittel, einem Agens mit trennmittelwirksamen Eigenschaften, ggf. einem Lösevermittler und ggf. weiteren an sich für Trennmittelzusammensetzungen üblichen Zusätzen wie Korrosionsinhibitoren, Stabilisatoren und/oder konsistenzregelnde Additive bestehen und sich dadurch auszeichnen, daß sie bezogen auf die Gesamtzusammensetzung wenigstens 20 Gew.-% Dichlortrifluorethan, 0,1 bis 80 Gew.-%, vorzugsweise 0,1 bis 30 Gew.-% eines trennmittelwirksamen Agens aus der Gruppe der Wachse, Wachsderivate, Metallseifen oder Silicone, sowie ggf. bis 75 Gew.-% eines aliphatischen Kohlenwasserstoff-Lösevermittlers enthalten.

Als Dichlortrifluorethan im Sinne der Erfindung können die Isomere 1,1-Dichlor-2,2,2-trifluorethan (R123), 1,2-Dichlor-1,2,2-trifluorethan (R133a) oder 2,2-Dichlor-1,1,2-trifluorethan (R123b) einzeln oder miteinander in beliebigen Gemischen vorliegen. Vorzugsweise wird aber 1,1-Dichlor-2,2,2-trifluorethan (R123), verwendet, Weiterhin können die Dichlortrifluorethan-Isomere oder deren Gemische gegebenfalls in erfindungsgemäßen Zusammensetzungen auch in Form eines Azeotrops mit den aliphatischer Kohlenwasserstoffen vorliegen.

Die erfindungsgemäßen Zusammensetzungen sind weiterhin dadurch gekennzeichnet, daß das trennmittelwirksame Agens ausgewählt ist aus der Gruppe der Wachse, Wachsderivate, Metallseifen oder Silicone.

Als Wachse im Sinne der Erfindung werden in einer Variante natürliche Wachse tierischer oder pflanzlicher Herkunft, vorzugsweise natürliche Wachse mit einem Erweichungspunkt von mindestens 40 °C, eingesetzt.

2

In einer anderen Variante der Erfindung sind die Wachse ungesättigte langkettige Ester von Carbonsäuren mit Monoalkohlen mit insgesamt 34 bis 50 C-Atomen. Bevorzugt sind hierbei Fettsäureester, die eine Iodzahl von unter 95, vorzugsweise von 30 bis 95, insbesondere 75 bis 95 aufweisen. Gemische solcher Fettsäureester sind kommerziell verfügbar und beispielsweise im Handbook of Chemistry and Physics, 55. Auflage, Seite C-753 beschrieben.

Eine weitere Variante ist dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden. Die durch Fluorwasserstoffbehandlung erhaltenen Derivate sind zum Beispiel aus der DOS 33 35 870 bekannte, fluorenthaltende, wachsartige Massen, deren Fluorgehalt in einem weiten Bereich variierbar ist. Der Fluorgehalt dieser Addukte von Fluorwasserstoff an diese ungesättigten langkettigen Ester liegt z.B. im Bereich von 0,1 bis 4,3 Gew.-%. Eine völlig andere Art von Derivaten der langkettigen ungesättigten Ester, die durch Fluorwasserstoffbehandlung erhältlich sind, sind ölige Produkte (nachstehend Sesquimere genannt) die gegenüber dem Ausgangswachs die 1,1, bis 1,9-fache Molmasse und einen Gehalt an nicht umgesetztem Wachs von unter 1 Gew.-% enthalten. Diese Wachsderivate enthalten - wenn überhaupt - nur sehr geringe Gehalte an gebundenem Fluor. In der Regal liegt der Fluorgehalt unter 0,1 Gew.-% und die Iodzahl in einem Bereich von 5 bis 20.

Es können auch andere Wachsderivate, z.B. durch Hydrierung von ungesättigten langkettigen Estern von Carbonsäuren mit Monoalkoholen mit insgesamt 34 bis 50 C-Atomen erhaltene, nunmehr teilgesättigte oder vollständig gesättigte Derivate eingesetzt werden. In diesem Zusammenhang werden unter teilgesättigten Derivaten solche verstanden, deren Iodzahl unter der des bei der Hydrierung eingesetzten Eduktes liegt.

Weitere Wachse, die im Sinne vorliegender Erfindung verwendet werden, sind synthetische Wachse, vorzugsweise Paraffinwachse oder Polyethylenwachse. In einer Variante wird sum Beispiel ein oxidiertes Polyethylenwachs mit mittlerem Molekulargewicht von 3700 bis 4500 (viskosimetrisch)und einer Säurezahl von 20 bis 30 und einem Schmelzpunkt von 89 bis 99 °C eingesetzt.

In einer anderen Art der erfindungsgemäßen Zusammensetzungen sind Silicone enthalten. Die verwendeten Silicone können in der Form von ölen, Fetten oder Harzen vorliegen Die Sillicone können als solche oder in Form von Siliconölemulsionen oder Siliconpasten, die einen Konsistenzregler, beispielsweise hochdisperse Kieselsäure, in das Siliconöl eingearbeitet enthalten, verwendet werden. Siliconfette enthalten gewöhnlich Metallseifen als konsistenzregelnde Bestandteile. Die in der vorliegenden Erfindung verwendeten Siliconprodukte sind im Handel verfügbare Produkte.

Eine weitere Variante der Erfindung ist dadurch gekennzeichnet, daß die Zusammensetzungen Metallseifen, beispielsweise fettsaure Salze der Metalle Magnesium, Calcium, Zink, Aluminium oder Blei enthalten. Gegebenenfalls werden die Metallsalze der Stearinsäure eingesetzt, wobei dann das Magnesiumstearat bevorzugt ist.

In einer weiteren Variante der Erfindung ist es vorgesehen, den Zusammensetzungen als Lösungsvermittler für das trennmittelwirksame Agens bis zu 75 Gew.-% eines aliphatischen kohlenwasserstoffes zuzusetzen. Der Lösungsvermittler kann in Mengen von 1 bis 75 Gew.-%, vorzugsweise 10 bis 30 Gew.-% in den Zusammensetzungen enthalten sein. Die Prozentangaben beziehen sich hierbei auf das Gesamtgemisch. Eine Ausführungsform der Erfindung zeichnet sich dadurch aus, daß als aliphatische Kohlenwasserstoff-Lösungsvermittler vorzugsweise Benzinfraktionen mit einem Siedebereich von z.B. 100 bis 140 °C, verwendet werden.

Bei weiteren Ausgestaltungen der erfindungsgemäßen Zusammensetzungen kann es vorgesehen sein, zusätzlich bis zu 1 Gew.-% bekannter Korrosionsinhibitoren zuzusetzen. Solche Korrosionsinhibitoren für Metalle wie z.B. Magnesium, Aluminium, Titan, Messing, Bronze, Stahl sind kommerziell verfügbar. Sie basieren zumeist auf Zusammensetzungen, die organische Verbindungen mit Hetero-Atomen wie Schwefel oder insbesondere Stickstoff enthalten. Bewährt haben sich z.B. einzelne Verbindungen oder Gemische aus der Klasse der Benzothiazole, z.B. Mercaptobenzothiazol, Benzimidazole, z.B. 2-Phenylbenzimidazol, Triazole, z.B. Benzotriazole, Tolyltriazole, Oxazoline, z.B.

Alkyl-und/oder Hydroxyalkyl-substituierte Oxazoline, Amide, Amine, z.B. tert. Amine. Weiterhin können den erfindungsgemäßen Zusammensetzungen ggf. übliche Stabilisatoren, insbesondere zur Stabilisierung des Dichlortrifluorethans, zugesetzt werden. Weiterhin können konsistenzregelnde Additive enthalten sein.

Die erfindungsgemäßen Zusammensetzungen liegen entweder als Lösungen oder als Dispersionen vor, wobei unter Dispersionen sowohl Emulsionen als auch Suspensionen verstanden werden.

Die Erfindung umfaßt auch die Verwendung der Zusammensetzungen als Trenn-, Gleit- bzw. Schalmittel, z.B. bei der Kunststoff-oder Schaumstoffherstellung oder in anderen Anwendungsbereichen.

Weiterhin umfaßt die Erfindung das Verfahren zur Herstellung der erfindungsgemäßen Zusammensetzungen, wobei man in das Dichtortrifluorethan 0,1 bis 80 Gew.-% vorzugsweise 0,1 bis 30 Gew.-%, eines oder mehrerer Agentien mit trennmittelwirksamen Eigenschaften aus der Gruppe der Wachse, Wachsderivate, Metallseifen oder silicone, sowie ggf. bis 75 Gew.-% eines aliphatischen Kohlenwasserstoff-Lösevermittlers und ggf. die weiteren ansich für Trennmittelzusammensetzungen üblichen Zusätze in einer auf das Gesamtgemisch bezogenen Menge einarbeitet.

Die erfindungsgemäßen Zusammensetzungen mit Dichlortrifluorethan als Lösungsmittel weisen verbesserte adhäsionsvermindernde Eigenschaften, hohe chemische Indifferenz und gutes Spreitungsvermögen auf. Gegenüber üblichen Trennmitteln, bei denen Kohlenwasserstoffe als Lösungsmittel verwendet werden, besitzen die erfindungsgemäßen Zusammensetzungen einen höheren Flammpunkt. Die Herstellung der erfindungsgemäßen Zusammensetzungen gestaltet sich infolge der guten Lösekraft des Dichlortrifluorethans - im Gegensatz zur Herstellung von Trennmitteln unter Verwendung von z.B. Kohlenwasserstoffen als Lösungsmittel - besonders einfach. Ein weiterer Vorteil der erfindungsgemäßen Zusammensetzungen besteht darin, daß sie gegenüber üblichen Zusammensetzungen energiesparender eingesetzt werden können. So muß z.B. beim Herstellen von Schaumstoffen nach dem Bestreichen der Form mit dem Trennmittel zunächst das Lösungsmittel verdampft werden. Bei Verwendung der erfindungsgemäßen Zusammensetzungen braucht die Form zum Verdampfen des Lösungsmittels weit weniger aufgeheizt zu werden als dies bei üblichen Zusammensetzungen nach dem Stand der Technik der Fall ist. Dies kann zur Energieeinsparung bis zu 10 % führen. Weiterhin ist der Einsatz der erfindungsgemäßen Zusammensetzungen anstelle herkömmlicher Trennmittelzusammensetzungen ökonomischer, da bei gleicher Anwendung weniger Trennmittelzussammensetzung verbraucht wird. Zusätzliche Vorteile zeigen sich bei längerer Verwendung der Formen z.B. darin, daß die verwendeten Formen zwischen den Arbeitsgängen seltener gereinigt werden müssen.

Die nachfolgenden Beispiele sollen die Erfindung näher erläutern.

Beispiel 1

Eine erfindungsgemäße Zusammensetzung wurde hergestellt aus 5 Gew.-% HF-Wachs-Addukt (bekannt als "Adukte" aus der DOS 33 35 870) und 95 Gew.-% Dichlortrifluorethan. Unter HF-Wachs-Addukt versteht man ein Wachsderivat, welches durch Fluorwasserstoff-Behandlung von ungesättigten langkettigen Estern von Carbonsäuren mit Monoalkoholen mit insgesamt 34 bis 50 C-Atomen erhalten wird, wobei dieses Derivat an die Doppelbindungen des Eduktes addierten Fluorwasserstoff aufweist. Die Herstellung dieses HF-Wachs-Adduktes entspricht dem Beispiel 1 oder DOS 33 35 870.

Die Zusammensetzung stellt eine klare Lösung dar und weist hervorragende trennmittelwirksame Eigenschaften auf.

Beispiele 2 bis 12

Analog zu Beispiel 1 wurden die weiteren in der folgenden Tabelle wiedergegebenen Beispiele 2 bis 12 von erfindungsgemäßen Zusammensetzungen hergestellt, die ebenfalls hervorragende trennmittelwirksame Eigenschaften besitzen. Die Komponenten sind in Gew.-% angegeben.

| Zusammensetzungs-bestandteile | Beispiel 2 | 3 | 4 | 5 | 6 | 7 | 8 | 9 | 10 | 11 | 12 |
|---|---|---|---|---|---|---|---|---|---|---|---|
| Dichlortrifluorethan | 95 | 90 | 81 | 50 | 90 | 20 | 80 | 80 | 20 | 80 | 20 |
| HF-behandeltes Wachs Sesquimer * | 5 | | | | | | | | | | |
| Wachsester (Jodzahl 85) | | 10 | | | | | | | | | |
| Siliconöl (20 000mm²/s) | | | 3 | 30 | 10 | | | | | | |
| Paraffin (Schmelzp. 56-58 °C) | | | | | | 5 | 5 | | | | |
| Oxidiertes Poly-ethylenwachs (Schmelzp. 89-99 °C) | | | | | | | | 5 | 5 | 4 | |
| Polyethylenwachs (Schmelzp. 98-108 °C) | | | | | | | | | | | 5 |
| Magnesiumstearat | | | | | | | | | | 1 | |
| Benzinfraktion (100-140 °C) | | | 16 | 20 | | 75 | 15 | 15 | 75 | 15 | 75 |
| Art der Zusammenset-zung ** | L | L | L | L | L | L | D | D | D | D | D |

\* bekannt aus der DOS 33 35 870 und hergestellt analog den dort angegebenen Beispielen 2 oder 3
\*\* L = klare Lösung; D = Dispersion

**Patentansprüche**

1. Flüssige Zusammensetzung, bestehend aus einem Verdünnungsmittel, einem Agens mit trennmittelwirksamen Eigenschaften, ggf. einem Lösevermittler und ggf. weiteren an sich für Trennmittelzusammensetzungen üblichen Zusätzen wie Korrosionsinhibitoren, Stabilisatoren und/oder konsistenzregelnde Additive, dadurch gekennzeichnet, daß sie bezogen auf die Gesamtzusammensetzung wenigstens 20 Gew.-% Dichlortrifluorethan, 0,1 bis 80 Gew.-%, vorzugsweise 0,1 bis 30 Gew.-% eines trennmittelwirksamen Agens aus der Gruppe der Wachse, Wachsderivate, Metallseifen oder Silicone, sowie ggf. bis 75 Gew.-% eines aliphatischen Kohlenwasserstoff-Lösevermittlers enthalten.

2. Zusammensetzung gemäß Anspruch 1, dadurch gekennzeichnet, daß die Wachse natürliche Wachse tierischer oder pflanzlicher Herkunft, vorzugsweise natürliche Wachse mit einem Erweichungspunkt von mindestens 40 °C, sind.

3. Zusammensetzung gemäß Anspruch 1, dadurch gekennzeichnet, daß die Wachse vorzugsweise ungesättigte langkettige Ester von Carbonsäuren mit Monoalkoholen mit insgesamt 34 bis 50 C-Atomen sind.

4. Zusammensetzung gemäß Anspruch 1, dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden.

5. Zusammensetzung gemäß Anspruch 1, dadurch gekennzeichnet, daß die Wachse synthetische Wachse, vorzugsweise Paraffinwachse oder Polyethylenwachse, sind.

6. Zusammensetzung gemäß Anspruch 1, dadurch gekennzeichnet, daß die Metallseifen vorzugsweise fettsaure Salze der Metalle Magnesium, Calcium, Zink, Aluminium oder Blei, insbesondere Salze der Stearinsäure dieser Metalle, sind.

7. Zusammensetzung gemäß Anspruch 1, dadurch gekennzeichnet, daß der Lösevermittler in Mengen von 1 bis 75 Gew.-%, vorzugsweise 10 bis 30 Gew.-% enthalten ist.

8. Zusammensetzung gemäß Anspruch 7, dadurch gekennzeichnet, daß als Lösevermittler eine Benzinfraktion mit einem Siedebereich innerhalb 100 bis 140 °C enthalten ist.

9. Verwendung von Zusammensetzungen gemäß einem der Ansprüche 1 bis 8 als Trenn-, Gleit- bzw. Schalmittel.

10. Verfahren zur Herstellung von Zusammensetzungen gemäß einem der Ansprüche 1 bis 8, dadurch gekennzeichnet, daß man in das Dichlortrifluorethan 0,1 bis 80 Gew.-%, vorzugsweise 0,1 bis 30 Gew.-%, eines oder mehrerer Agentien mit trennmittelwirksamen Eigenschaften aus der Gruppe der Wachse, Wachsderivate, Metallseifen oder Silicone, sowie ggf. bis 75 Gew.-% eines aliphatischen Kohlenwasserstoff-Lösevermittlers und ggf. die weiteren ansich für Trennmittelzusammensetzungen üblichen Zusätze in einer auf das Gesamtgemisch bezogenen Menge einarbeitet.

**Claims**

1. A liquid composition, consisting of a diluent, an agent with release-effective properties, optionally a solubiliser and optionally further conventional additives for release agent compositions, such as corrosion inhibitors, stabilisers and/or consistency-regulating additives, characterised in that they contain, relative to the total composition, at least 20% by weight dichlorotrifluoroethane, 0.1 to 80% by weight, preferably 0.1 to 30% by weight, of a release-effective agent from the group of waxes, wax derivatives, metal soaps or silicones, and also optionally up to 75% by weight of an aliphatic hydrocarbon solubiliser.

2. A composition according to Claim 1, characterised in that the waxes are natural waxes of animal or vegetable origin, preferably natural waxes having a softening point of at least 40°C.

3. A composition according to Claim 1, characterised in that the waxes are preferably unsaturated long-chain esters of carboxylic acids with monoalcohols, having 34 to 50 C atoms in total.

4. A composition according to Claim 1, characterised in that the wax derivatives are derivatives which are obtained by sulphochlorination, sulphiding or hydrogen fluoride treatment of unsaturated long-chain esters of carboxylic acids with monoalcohols, having 34 to 50 C atoms in total.

5. A composition according to Claim 1, characterised in that the waxes are synthetic waxes, preferably paraffin waxes or polyethylene waxes.

6. A composition according to Claim 1, characterised in that the metal soaps are preferably fatty acid salts of the metals magnesium, calcium, zinc, aluminium or lead, in particular salts of stearic acid of these metals.

7. A composition according to Claim 1, characterised in that it contains the solubiliser in quantities of 1 to 75% by weight, preferably 10 to 30% by weight.

8. A composition according to Claim 7, characterised in that it contains a petroleum fraction having a boiling range of 100 to 140°C as solubiliser.

9. Use of compositions according to one of Claims 1 to 8 as release agents, lubricants or stripping agents.

10. A process for preparing compositions according to one of Claims 1 to 8, characterised in that 0.1 to 80% by weight, preferably 0.1 to 30% by weight, of one or more agents with release-effective properties from the group of waxes, wax derivatives, metal soaps or silicones, and also optionally up to 75% by weight of an aliphatic hydrocarbon solubiliser and optionally the further conventional additives for release agent compositions are incorporated into the dichlorotrifluoroethane in a quantity relative to the total mixture.

**Revendications**

1. Composition liquide consistant en un diluant, un agent ayant des propriétés anti-adhérentes, éventuellement un agent solubilisant et, le cas échéant, d'autres additifs usuels pour compositions de démoulage tels qu'inhibiteurs de corrosion, stabilisants et/ou additifs régulateurs de la consistance, caractérisée en ce qu'elle contient, par rapport à la composition totale, au moins 20% en poids de dichlorotrifluoroétnane,0,1 à 80% en poids, de préférence 0,1 à 30% en poids d'un agent anti-adhérent du groupe des cires, des dérivés de cire, des savons métalliques ou des silicones, ainsi qu'éventuellement jusqu'à 75% en poids d'un agent solubilisant à base d'un hydrocarbure aliphatique.

2. Composition selon la revendication 1, caractérisée en ce que les cires sont des cires naturelles d'origine animale ou végétale, de préférence des cires naturelles avec un point de ramollissement d'au moins 40°C.

3. Composition selon la revendication 1, caractérisée en ce que les cires sont de préférence des esters insaturés à longue chaîne d'acides carboxyliques avec des monoalcools comportant au total 34 à 50 atomes de C.

4. Composition selon la revendication 1, caractérisée en ce que les dérivés de cire sont des dérivés obtenus par sulfochloruration, sulfuration ou traitement par l'acide fluorhydrique d'esters insaturés à longue chaîne d'acides carboxyliques avec des monoalcools comportant au total 34 à 50 atomes de C.

5. Composition selon la revendication 1, caractérisée en ce que les cires sont des cires synthétiques, de préférence des cires de paraffine ou des cires de polyéthylène.

6. Composition selon la revendication 1, caractérisée en ce que les savons métalliques sont de préférence des sels d'acides gras des métaux magnésium, calcium, zinc, aluminium ou plomb, notamment des sels de l'acide stéarique et de ces métaux.

7.  Composition selon la revendication 1, caractérisée en ce que l'agent solubilisant est présent en quantités de 1 à 75% en poids, de préférence de 10 à 30% en poids.

8.  Composition selon la revendication 7, caractérisée en ce qu'une fraction d'essence avec un intervalle d'ébullition de 100 à 140°C est présenteen tant qu'agent solubilisant.

9.  Utilisation des compositions selon l'une des revendications 1 à 8 en tant qu'agents de démoulage, lubrifiants ou agents de décoffrage.

10. Procédé pour la préparation de compositions selon l'une des revendications 1 à 8, caractérisé en ce qu'on incorpore dans le dichlorotrifluoréthane 0,1 à 80% en poids, de préférence 0,1 à 30% en poids d'un ou plusieurs agents possédant des propriétés anti-adhérentes du groupe des cires, des dérivés de cire, des savons métalliques ou des silicones, ainsi qu'éventuellement jusqu'à 75% en poids d'un agent solubilisant à base d'un hydrocarbure aliphatique et, le cas échéant, les autres additifs usuels pour compositions de démoulage en une quantité rapportée au mélange total.